# EUROPEAN PATENT APPLICATION

(11) **EP 1 674 969 A1**
(43) Date of publication of application: **28.06.2006**
(21) Application number: 03757637.8
(22) Date of filing: 15.10.2003
(51) Int. Cl.: G06F 1/16

(54) **A COMPUTER WITH COMBINED MAINFRAME AND DISPLAY**

(71) Applicant: Yang, Kuo-Yao, Tainan County, Taiwan (CN)
(72) Inventor: Yang, Kuo-Yao, Tainan County, Taiwan (CN)
(74) Representative: Chaillot, Geneviève
(86) International application number: PCT/CN2003/000859
(87) International publication number: WO 2005/036373

(57) **Abstract**

The present invention discloses a computer with combined mainframe and display, which includes a screen, a mainframe part and peripheral device placing areas, which are combined with each other, therein there are more than one slots at the side near the peripheral device placing areas of the screen and mainframe part, there is a first space for containing a power supply in the construct parts near one side of the peripheral device placing areas; and there is a second space for containing connecting wires of a connecting device of the peripheral devices near one side of the mainboard; there are several spaces formed by some construct parts for containing peripheral devices in the peripheral devices placing area at the lower side of the screen and mainframe parts, wherein the construct parts are steadily assembled between the supporting frames at predesigned height interval; there are several heat emission areas provided in association with the peripheral device placing areas at the bottom of both sides of the peripheral device placing areas, where the heat emission areas exchange heat with outside in operation, the ratio of the space that combination of the mainframe and display occupied to that of the whole is minimum, and space for containing peripheral devices are divided into several containing spaces for appending device.

## Description

### FIELD OF THE INVENTION

The present invention relates to a computer with combined mainframe and display and more particularly to an integral computer having improved characteristics such as storage space saving, reserved space for future expansion, easy adjustment of monitor angle about a supporting ground, horizontal turning and height adjustment of monitor, and movement.

### BACKGROUND OF THE INVENTION

One characteristic of notebook computer is compact for saving a storage space. However, the notebook computer is modularized and thus future expansion is limited. For taking advantage of the advantageous benefit of notebook computer, a number of major computer manufacturers such as IBM Corp., Apple Computer, Compaq., etc. have developed integral computers for tailoring the needs of consumers. Unfortunately, such integral computers also have the same drawback of lacking space for future expansion as the notebook computer. Thus, continuing improvements in the field of integral computer are constantly being sought.

### SUMMARY OF THE INVENTION

It is therefore an object of the present invention to provide a computer with combined mainframe and display with minimum occupation, wherein space for containing peripheral devices at the mainframe space are divided into several containing spaces for appending device, so as to provide a computer with combined mainframe and display with enhanced function for future expansion.

It is therefore a further object of the present invention to provide a support device for supporting the monitor, so that a keyboard is attractable between the support device prior to carrying the whole computer to a predetermined location.

The present invention is achieved through the technique described below: a computer with combined mainframe and display, which includes a screen, a mainframe part and peripheral device placing areas, which are combined with each other, characterized in that there are more than one slots at the side near the peripheral device placing areas of the screen and mainframe part, there is a first space for containing a power supply in the construct parts near one side of the peripheral device placing areas; and there is a second space for containing connecting wires of a connecting device of the peripheral devices near one side of the mainboard; there are several spaces formed by some construct parts for containing peripheral devices in the peripheral devices placing areas at the lower side of the screen and mainframe parts, wherein the construct parts are steadily assembled between the supporting frames at predesigned height interval; there are several heat emission areas provided in association with the peripheral device placing areas at the bottom of both sides of the peripheral device placing areas, where the heat emission areas exchange heat with outside in operation, the ratio of the space that combination of the mainframe and display occupied to that of the whole is minimum, and space for containing peripheral devices are divided into several containing spaces for appending device. A computer with combined mainframe and display, including a screen, a mainframe part and peripheral device placing areas and a support device for steadily supporting the computer, characterized in that a pedestal of predesigned size having a space or containing on the center of the top so as to steadily receive and position a lower plate consisting of a metal plate body and a cover, said lower plate having two upright lugs at one side being positionally fixed to two lugs of an upper plate consisting of a metal plate body and a cover; a pin of non-round shape passing through the lugs of the upper and lower plates and a prop member in order; and an adjusting screw being screwed into a threaded hole projected backwardly from the upper plate and contacting with the prop member, said adjusting screw being disposed on the computer on the top of the support device and for angle and position adjustment.

A computer with combined mainframe and display, in which the construct parts near the top of said peripheral device placing areas is set on the bottom of the screen and mainframe part and steadily assembled on the top of the supporting frames, and the construct parts near the bottom is set on the bottom of the supporting frames. The second space for containing connecting wires of the peripheral device placing areas is enclosed by a second cover having tenons extending from both sides corresponding to a rear cover, said second cover is easily detachable for repairing the connecting wires of peripheral devices. The rear cover enclosing the rear and periphery of the screen and mainframe part has a recessed carrying section on a centre-of-gravity position at the upper for carrying the integral computer. A computer with combined mainframe and display includes a screen, a mainframe part and peripheral device placing areas and a support device for steadily supporting the computer, characterized in that said support device has a projection projecting from a centre-of gravity position of the upper plate, said metal plate body having fixing members at both sides on the top surface for positionally fixing the screen and mainframe parts, said screen and mainframe part having a pair of outward tenons and a bottom hole on the bottom, each of said tenon being backwardly inserted into a groove of each of the fixing members of the upper plate until an arc limiting member projecting from the bottom surface of the screen and mainframe part being limited by a peripheral rim of the upper plate, and the projection being inserted into the bottom hole.

### BRIEF DESCRIPTION OF THE DRAWINGS

FIG. 1 is a front perspective view of a computer with combined mainframe and display according to the invention;
FIG. 2 is a rear perspective view of the computer with combined mainframe and display according to the invention;
FIG. 3 is a rear perspective view of the computer with combined mainframe and display and a support device according to the invention;
FIG. 4 is another rear perspective view of the computer with combined mainframe and display and a support device according to the invention;
FIG. 5 is an exploded view of the computer with combined mainframe and display, a rear cover and second cover according to the invention;
FIG. 6 is an exploded view of support device according to the invention;
FIG. 7 illustrating the computer and the support device according to the invention prior to being assembled;
FIG. 8 illustrating a forward inclining adjustment of the computer supported on the support device; and
FIG. 9 illustrating a backward inclining adjustment of the computer supported on the support device.

### DETAILED DESCRIPTION OF THE PREFERRED EMBODIMENTS

The present invention will be detailed described bellow by the embodiments with reference to the annexed figures.

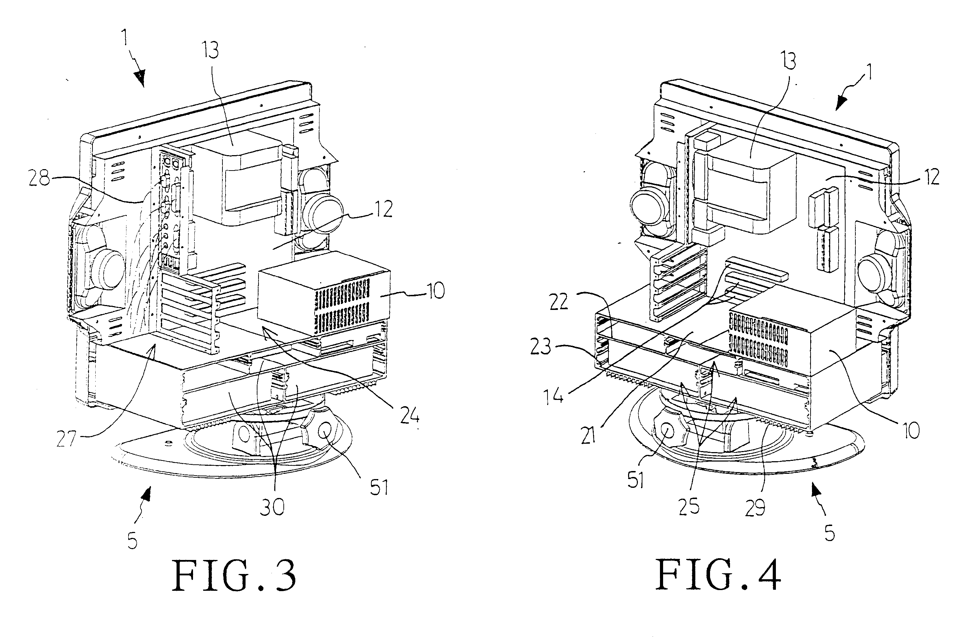

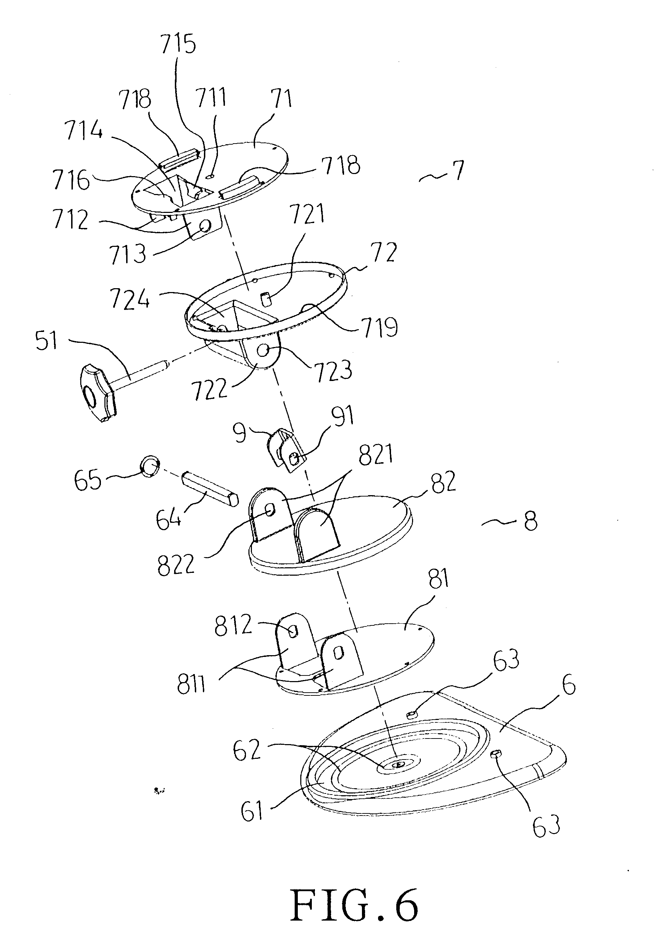

The present invention provides a computer with combined mainframe and display, as shown in FIGs. 3, 4 and 6, which includes a screen and mainframe part 1, peripheral device placing areas 2, a control panel 3 and a rear cover 4. The screen and mainframe part 1 is a monitor and computer assembly manufactured according to predesigned computer specification, comprising two side speakers 11. Inside the screen and mainframe part 1 there are a motherboard 12, a CPU cooler 13 and more than one slots 14 near the peripheral device placing areas 2 for future expansion so that a user may expand the equipments such as installations of a network adapter, a voice card, a 3D acceleration card, or the like. A first space 24 for containing a power supply 10 is formed in the construct parts 21 near one side of the peripheral device placing areas 2. A second space 27 is formed near one side of the mainboard 12 for containing connecting wires 28 of a connecting device of the peripheral devices (e.g. a scanner, printer and so on). The peripheral devices placing areas 2 is divided into several spaces depending on width and depth of the screen and mainframe parts 1. Said peripheral devices placing areas 2 is divided by construct parts 21, 22 and 23 at predesigned height interval and in association with heat emission areas 29 for exchanging heat with outside in operation. The construct parts is arranged in order from top to bottom a first, second and third construct parts 21, 22 and 23, wherein the first construct part 21 is set on the bottom of the screen and mainframe parts 1. The first, second and third construct parts 21, 22 and 23 are respectively divided into several containing spaces, wherein there are equipment store spaces or containing spaces 25 for storing equipments 30 such as hard drives, florry disk drives, optical devices, or the like. The control panel 3 has a size of the width and height of the peripheral devices placing areas 2. The control panel 3 comprises a front panel 31 and a plurality of holes 32 on the front panel 31 for receiving preset functional keys of the peripheral devices placing areas 2. The rear cover 4, referring to FIG. 5, is a rear covering part having a size of the width and height of the screen and mainframe parts 1 and peripheral devices placing areas 2. The rear cover 4 comprises two side cabinets 41 for enclosing the speakers 11, intermediate and lower openings 42 and 44 respectively facing the CPU cooler 13 and a fan of the power supply, and a second cover 45 related to the second space 27 of the peripheral devices placing areas 2 for containing connecting wires the peripheral devices (e.g. a scanner, printer and so on), wires 28 being passing through guiding opening 47 of the rear cover 4. Said second cover 45 has a cavity 452 connecting the related peripheral devices and is fixed to the rear cover 4 though tenons 451 so that it is only necessary to detach the second cover 45 when installing wires 28 of the peripheral devices (e.g. a scanner, printer and so on).

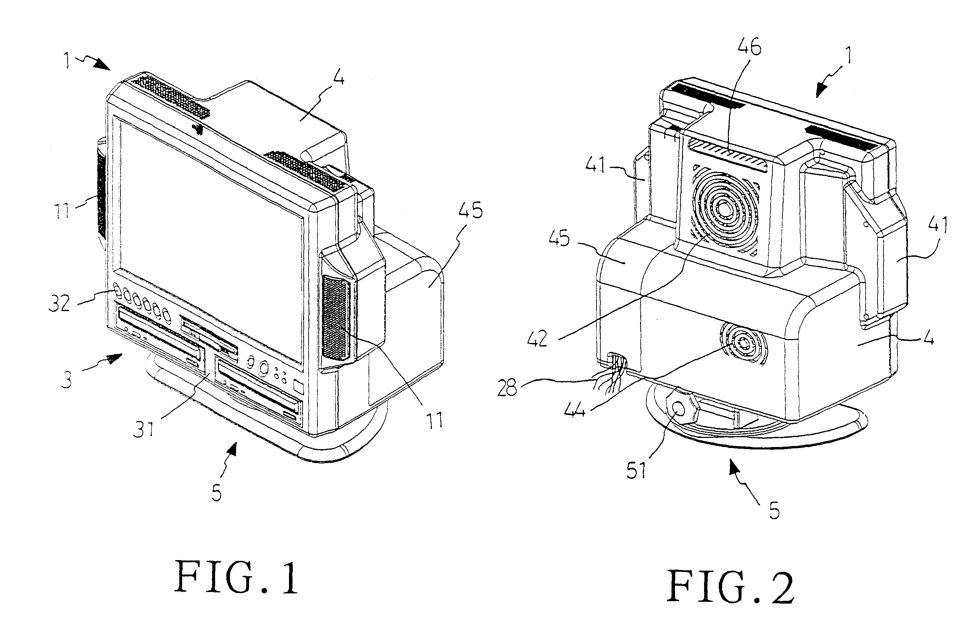

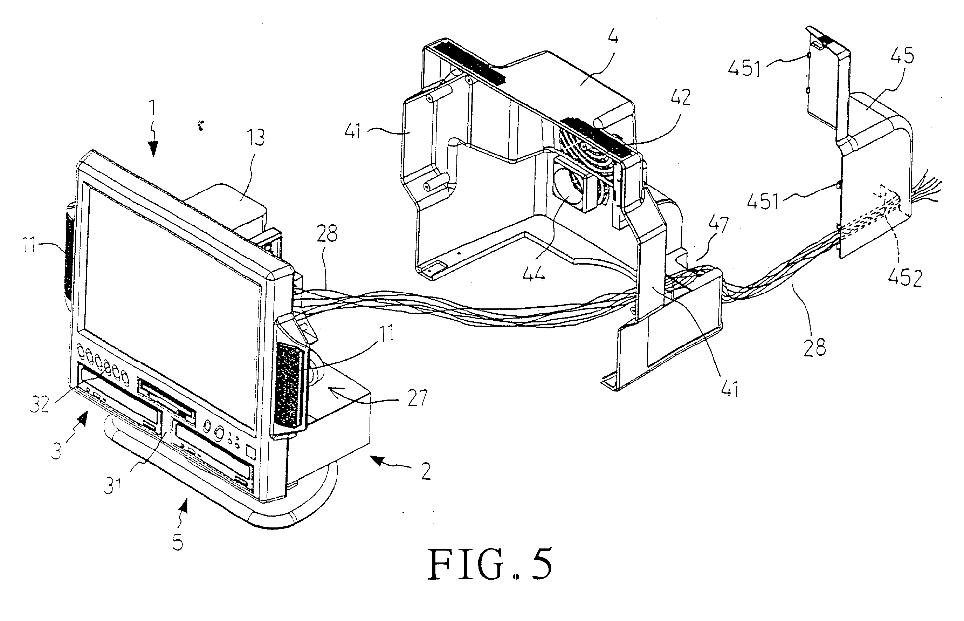

FIG. 2 is a assembly illustration of the integral computer according to the invention. Also referring to FIGs. 3, 4, and 5, after steadily assembling the first, second and third construct parts 21, 22 and 23 of the peripheral devices placing areas 2, the control panel 3 is positionally fixed with the screen and mainframe parts 1 being set on the first construct part 21 near the top of the peripheral devices placing areas 2. Further, the rear cover 4 and second cover 45 is fixed to the periphery and back of the screen and mainframe parts 1 and the back of the peripheral devices placing areas 2, as shown in FIG. 2. The holes 32 on the front panel 31 of the control panel 3 matches with the preset functional keys the peripheral devices placing areas 2, as shown in FIG. 1. The side cabinets 41 of the rear cover 4 matches with the speakers 11 of the screen and mainframe parts 1 for resonating, and the intermediate and lower openings 42 and 44 matches respectively the CPU cooler 13 and a fan of the power supply of the screen and mainframe parts 1 for cooling and exchanging heat with outside in operation.

FIGs. 3 and 4 particularly disclose the peripheral devices placing areas 2 combined with the screen and mainframe parts 1, since a plurality of spaces or containing spaces 25 are divided inside, it is possible to install CD-RW, hard drives, or optical devices on personal demand, so as to offering DIY computer with combined mainframe and display.

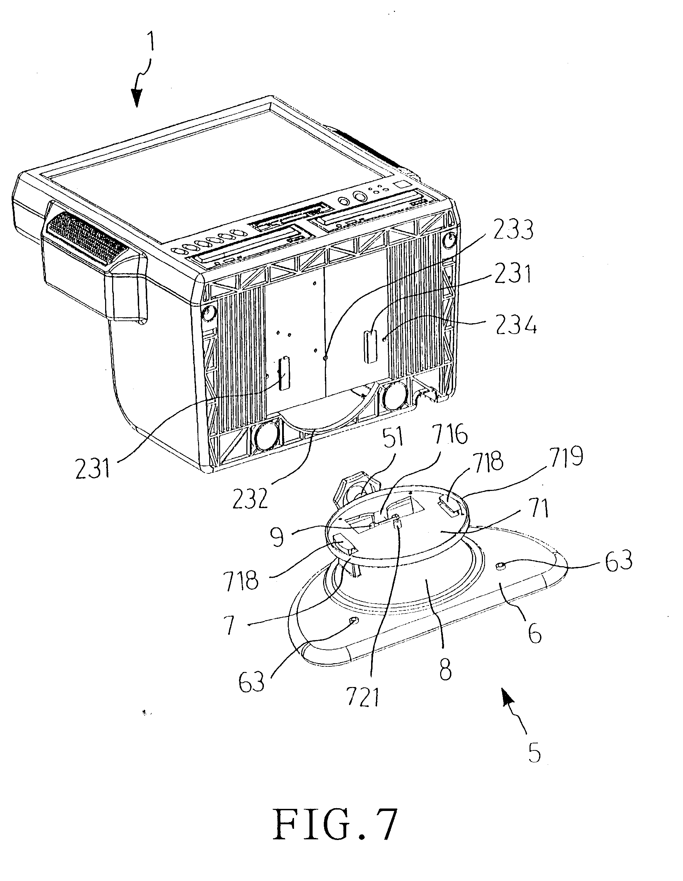

On the other hand, the present invention provides a support device 5 for steadily supporting the integral computer and for easily position adjusting, as shown in FIG. 7. The support device 5 consists of a pedestal 6, an upper plate 7, a lower plate 8, a prop member 9 and an adjusting screw 51.

As shown in FIG. 6, said pedestal 6 is formed of a board having a predesigned shape and size for steadily supporting the screen. The pedestal has space or containing space 61 recessed on the top surface. Said containing space 61 has a plurality of ring-shaped flanges 62 projected from the top surface and magnetic members 63 embedded in both front side of the top surface.

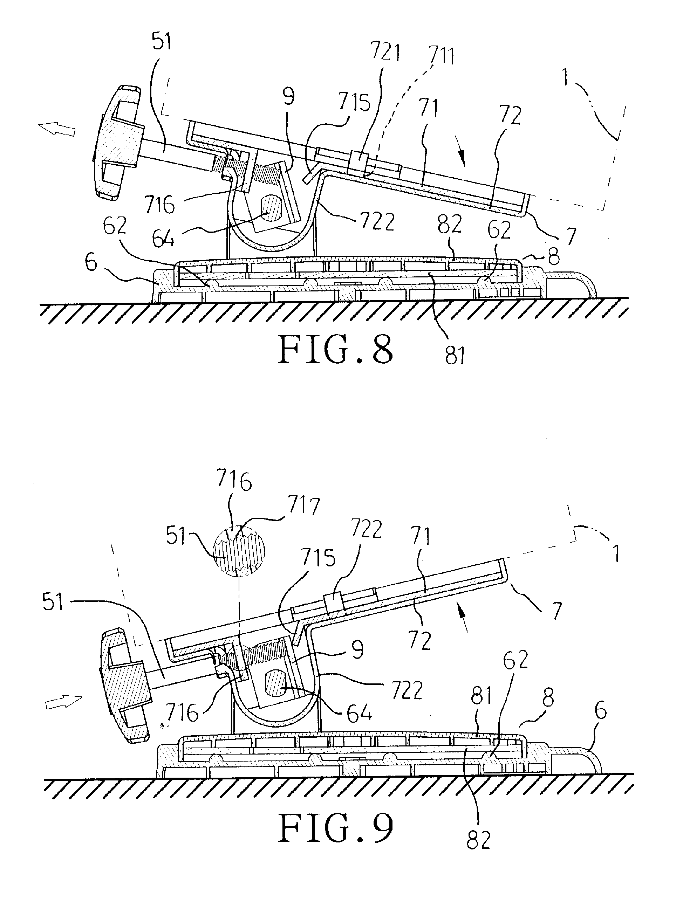

Each of the upper and lower plates 7 and 8 has a plate body 71 or 81 made of metal material and covered by tough plastic cover 72 or 82. The periphery of the lower plate 8 is shaped for being firmly received by the containing space 61 of the pedestal 6 and the metal plate body 81 contacting the ring-shaped flange 62, as shown in FIGs. 6 and 8. Both the plate body 81 and cover 82 have two upright lugs 811 and 821 on one side, said lugs 811 and one of the lugs 821 have through holes 312 and 822 (said holes 812 and 822 is shaped according to a pin 64 of the upper and lower plates 7 and 8) with one of the lugs 821 of the cover 82 having no through hole.

The upper plate 7 is designed for firmly supporting the screen. A projection 721 projects upwardly from the centre-of-gravity position of the cover 72 and passes through a hole 711 of the plate body 71, as shown in FIGs. 6 and 8. Two pairs of lugs 712 and 722 respectively extend from one side of the plate body 71 and cover 72 and have though holes 713 and 723, wherein each of the holes 713 and 723 has a diameter fitting with the largest diameter of the pin 64 of the upper and lower plates 7 and 8. Each of the plate body 71 and cover 72 further has an opening 714 or 724. Protrusions 715 and 716 extend downwardly from the front and rear side of the opening 714 of the metal plate body 71, with reference to FIG. 8, wherein said protrusion 716 at the rear side has a threaded hole 717 as shown in FIG.. 9, with the adjusting screw 51 being screwed therein. The metal plate body 71 further has a pair of fixing member 718 on both sides of the top surface.

The prop member 9 is a U-shaped positioning prop member of metal material and has holes 91 shaped according to the sectional shape of the pin 64.

The assembly steps, please refers to FIGs. 6 and 8. Fist, the metal plate bodies 71 and 81 are respectively covered by the covers 72 and 82 to form the upper and lower plates 7 and 8. Second, the lugs 712 and 722 of the upper plate 7 are matched with the lugs 811 and 821 of the lower plate 8. Third, the pin 64 is inserted through the holes of the lugs of the upper and lower plates 7 and 8 and the holes 91 of the U-shaped prop member 9 and covered by a plastic nut 65. Fourth, the adjusting screw 51 is screwed into the thread hole 717 until contacting the prop member 9. Fifth, the assembled lower plate 8 is disposed in the containing space 61 of the pedestal 6 and fastened by a plurality of fasteners, as shown in FIG. 8.

FIG. 7 illustrates the assembly of the screen and mainframe parts 1 and the support device 5. A pair of outward tenons 231 formed on the screen and mainframe parts 1 are backwardly inserted into grooves of the fixing members 718 of the upper plate 7 until an arc limiting member 232 projecting from the bottom surface of the screen and mainframe parts 1 being limited by a peripheral rim of the cover 72 of the upper plate7. Hereby, the projection 721 of the upper plate 7 will insert into a bottom hole 234 of the screen and mainframe parts 1 so that the support device 5 and the screen and mainframe parts 1 are steadily combined together by easy operation.

FIG. 8 illustrates a forward inclining adjustment of the screen and mainframe parts 1 supported on the support device 5, a user may rotate the adjusting screw 51 outward manually to turn the upper plate 7 incline forwardly to a desired angle. Stop rotating the adjusting crew 51 will position the upper plate 7 so as to keep the angle related to the lower plate 8.

FIG. 9 illustrates a backward inclining adjustment of the screen and mainframe parts 1 supported on the support device 5, a user may rotate the adjusting screw 51 inward manually to turn the upper plate 7 incline backwardly to a desired angle. Stop rotating the adjusting crew 51 will position the upper plate 7 so as to keep the angle related to the lower plate 8.

As to movement of the computer, it comprises placing a keyboard on the pedestal 6 to cause the keyboard be magnetically attracted by the magnetic members 63 prior to carrying the whole computer to a desired location by taking the carrying section 45 and the support device 5 and enjoy the joy and convenience of DIY

## Claims

1. A computer with combined mainframe and display, including a screen, a mainframe part and peripheral device placing areas, which are combined with each other, **characterized in that** there are more than one slots at the side near the peripheral device placing areas of the screen and mainframe parts, there is a first space for containing a power supply in the construct parts near one side of the peripheral device placing areas; and there is a second space for containing connecting wires of a connecting device of the peripheral devices near one side of the mainboard; there are several spaces formed by some construct parts for containing peripheral devices in the peripheral devices placing areas at the lower side of the screen and mainframe parts, wherein the construct parts are steadily assembled between the supporting frames at predesigned height interval; there are several heat emission areas provided in association with the peripheral device placing areas at the bottom of both sides of the peripheral device placing areas, where the heat emission areas exchange heat with outside in operation, the ratio of the space that combination of the mainframe and display occupied to that of the whole is minimum, and space for containing peripheral devices are divided into several containing spaces for appending device.

2. A computer with combined mainframe and display of claim 1, **characterized in that** the construct parts near the top of said peripheral device placing areas is set on the bottom of the screen and mainframe parts and steadily assembled on the top of the supporting frames, and the construct parts near the bottom is set on the bottom of the supporting frames.

3. A computer with combined mainframe and display of claim 1, **characterized in that** the second space for containing connecting wires of the peripheral device placing areas is enclosed by a second cover having tenons extending from both sides corresponding to a rear cover, said second cover is easily detachable for repairing the connecting wires of peripheral devices.

4. A computer with combined mainframe and display of claim 3, **characterized in that** said rear cover has a recessed carrying section on a centre-of-gravity position at the upper for carrying the computer.

5. A computer with combined mainframe and display, including a screen, a mainframe part and peripheral device placing areas and a support device for steadily supporting the computer, **characterized in that** a pedestal of predesigned size has a space or containing on the center of the top so as to steadily receive and position a lower plate consisting of a metal plate body and a cover, said lower plate having two upright lugs at one side being positionally fixed to two lugs of an upper plate consisting of a metal plate body and a cover; a pin of non-round shape passing through the lugs of the upper and lower plates and a prop member in order; and an adjusting screw being screwed into a threaded hole projected backwardly from the upper plate and contacting with the prop member, said adjusting screw being disposed on the computer on the top of the support device and for angle and position adjustment.

6. A computer with combined mainframe and display of claim 5, **characterized in that** said support device has a projection projecting from a centre-of gravity position of the upper plate, said metal plate body having fixing members at both sides on the top surface for positionally fixing the screen and mainframe parts, said screen and mainframe part having a pair of outward tenons and a bottom hole on the bottom, each of said tenon being backwardly inserted into a groove of each of the fixing members of the upper plate until an arc limiting member projecting from the bottom surface of the screen and mainframe part being limited by a peripheral rim of the upper plate, and the projection being inserted into the bottom hole.

7. A computer with combined mainframe and display of claim 5, **characterized in that** said pedestal has magnetic members 63 embedded in both front side of the top surface for attracting a keyboard magnetically when carrying the computer.
